# EUROPEAN PATENT SPECIFICATION

(11) **EP 0 469 674 B1**
(45) Date of publication and mention of the grant of the patent: **11.10.1995**
(21) Application number: 91201945.2
(22) Date of filing: 24.07.1991
(51) Int. Cl.: E02B 3/02, E02F 5/28

(54) **Device for the removal of a surface layer from an underwater bed, such as layer of sludge**
Gerät zur Entfernung einer Oberflächenschicht eines Unterwasserbodens wie einer Schlammschicht
Dispositif pour enlever une couche superficielle d'une surface immergée telle qu'une couche de vase

(30) Priority: 30.07.1990 NL 9001722
(43) Date of publication of application: 05.02.1992
(73) Proprietor: HOLLANDSCHE BETON GROEP N.V., 2280 AB Rijswijk (NL)
(72) Inventor: Van Der Schrieck, Gérard Louis Marie, NL-2613 BW Delft (NL)
(74) Representative: de Bruijn, Leendert C.

(56) References cited:
- DE-A- 2 700 595
- NL-A- 7 712 207
- NL-A- 8 800 129
- US-A- 1 508 521
- US-A- 3 412 862
- SOVIET INVENTIONS ILLUSTRATED Section PQ, Week 8348, 18 January 1984 Derwent Publications Ltd., London, GB; Class Q42, AN 83-831693/48 & SU-A-992 667 (HYD.ENG.MELIOR RES) 30 January 1983

## Description

The present invention relates to a device according to the preamble of claim 1 or 2.

Such device is known from NL 88 00129. This known device has a frame to be lowered onto the underwater bed. To loosen the surface layer to be removed, chains suspended from the top of the frame act as passive soil loosening means. There are suction apertures connected to a first liquid pump to suck the surface layer loosened by the chains. There is a screen, the outer or bottom edge of which bounds the periphery of an opening through which the chains and the apertures can engage with the underwater bed. The outer or bottom edge of the screen comprises along its length flexible edge means. These flexible edge means are panels of rubber. The screen together with the flexible edge means surround the chains and the apertures. This device is especially designed to operate on smooth underwater surfaces, such as a concrete bed. The passive soil loosening means are merely operative if the device is moved parallel to the underwater bed. The device functions more or less as the mouth piece of a vacuum cleaner, such that large quantities of water must be drawn from the outside through the flexible edge means to loosen and remove the soil. The separation of the water from the mixture of removed soil and water is laborious.

There are some further disadvantages to this known device. One is that the rigid side walls fail in sealing off the volume of water under all conditions which makes the loosening of the surface layer by the water stream less effective. Such is the case if the surface layer to be removed from the underwater bed contains rigid material e.g. rocks etc., or if the underwater bed is uneven such that parts of these side walls are raised above te surface layer to be removed, causing leaks.

Furthermore, the flexible edges used with this known device show leaks at their adjoining boundaries, especially when the underwater bed to which they adapt to is extremely uneven. And their length fail to adapt to local deep pits, while they are also too rigid to screen-off adequately at e.g. a rock made underwater bed as a slope.

Also, applicant has only recently observed that the positioning of the known device on and its removal from the underwater bed contributes to pollution of the environment. The relatively great water displacement of the sealed-off screen compared to the covered working area means in fact that movements thereof causes eddies in the water. These eddies can mean that in the environment of the device moving above the underwater surface a part of the surface layer to be removed is churned away and can settle unimpeded elsewhere in the water. Due to the recently tightened standards, the pollution thereby caused in the environment where a surface layer is being removed in such a way from an underwater bed has become unacceptable. For example the known device described above has to be raised and lowered repeatedly to clean its grates for the removal of very large foreign objects.

In addition, there is the problem that during the process removed surface layer mixed with water leaks out of the screen, possibly caused by overpressure within the screen.

Another disadvantage of the known device is that it is not designed to operate on an underwater bed which is very uneven or if the confined area contains rigid foreign objects, e.g. waste products like cans etc.. In such situations loss of sealing properties and/or damage to the flexible edge means can be effected. Under such circumstances, cleaning of the underwater bed is not possible or partly executed meanwhile causing many eddies outside the confined area and contaminating the surrounding water with parts churned away from the surface layer while removing it.

An object of the present invention is largely to reduce, or even to eliminate entirely, the above-mentioned disadvantages of the known device.

For this purpose, the device of the type described above is characterised by the characterising part of claim 1 or 2. The bottom edge can adapt to all circumstances of the underwater bed, ensuring a proper seal, even under flowconditions, for example in a river.

According to a preferred embodiment, the lower edge of the relatively thin loose fitting flexible web-like means is weightened, depending on the desired stability regarding forces due to waterflows. The web, or apron, if loose fitting can drape itself, adapting to the local shape of the underwater bed, and is relatively cheap and easy in use. Despite the fact that the device according to the invention is surrounded by such web-like means while in this art typically massive and rigid means are used, tests have shown that such means surprisingly function well.

A more complex flexible edge means according to the invention comprises resilient strip means, which can be used in places where the volume has to be kept as small as possible, for reasons to be explained later. Combination of both web-like means and resilient strip means is possible.

To reduce or eliminate entirely the occurance of eddies during movements of the device to and from the underwater bed or parrallel above it, according to a preferred embodiment of the invention closable holes are provided in the screen.

In the unclosed state of the holes the device according to the present invention has a relatively low water displacement, so that during movements of the device the occurrence of eddies in the water is then limited to a greater extent or is even eliminated. Since the holes are closed during the removal of the surface layer from the underwater bed, good sealing of the screen of the device is ensured.

It is preferable in the case of the device according to the invention for the closable holes to be shut off by panels which can be moved virtually parallel to the screen.

In this way it is ensured that as little water displacement as possible occurs also during the shutting off and opening of the closable holes, in order to restrict the occurrence of eddies in the water to a minimum, or even prevent them entirely.

It is also possible in the case of the device according to the invention to fit over the closable holes a sealing flexible layer which is fastened to the screen and is of a larger size (loose fitting) than a hole to be shut off.

This embodiment of the invention can be used either with or without panels for sealing off the closable holes and will be explained in greater detail in the description of the figures.

To further eliminate leakage of surface layer mixed with water outside the screen, despite the flexible edge means, the device according to the invention can be further provided with means for the creation and maintenance of a lower pressure (partial vacuum) in the screen placed on the underwater bed relative to the environment.

For the efficient removal of a surface layer from e.g. a rocky underwater bed, such as a slope, it is preferable that in the device according to the invention a liquid stream directed towards the underwater bed is produced, for which the device could comprise one or more jet nozzles which are connected to a second liquid pump and which can be directed towards the underwater bed. A possibility for adjusting the jet nozzles, during or before the operation, in such a way that the liquid jet stream is mainly directed to the underwater bed but with an inclination to the suction opening, could create an artificial flow on the underwater bed in the direction of the suction opening during operation. This is especially needed when the operation is carried out on horizontal underwater beds.

To supply more process liquid to the screen, an auxiliary water inlet pipe could discharge in the screen. This water inlet pipe can e.g. be connected to the second liquid pump mentioned, or can be connected to a third liquid pump to create a large discharge flow with a low velocity within the screen, such that the stability of the web-like means is assured.

On more sandy underwater beds, screw type means can be used to "wipe off" the surface layer.

It is also preferable for a grille to be situated in the opening at the bottom side of the closed screen of the device according to the invention. In this way it is possible to ensure that, for example, during the removal of a surface layer from the underwater bed other parts are not also removed from the underwater bed in question.

The invention will be explained below with reference to examples of embodiments shown in the accompanying drawings. In the drawings shows:
Fig. 1 a schematic view in cross-section along the line I-I in Fig. 2 of an embodiment of the device according to the present invention;
Fig. 2 a top view of this embodiment;
Fig. 3 a view in cross-section along the line III-III of the device shown in Fig. 1;
Fig. 4 a schematic view of an alternative embodiment of a number of details of the device shown in Fig. 1;
Fig. 5 a schematic top view of a further embodiment of the present invention, with parts broken away;
Fig. 6 a sectional view of the embodiment of fig. 5. along the line VI-VI;
Fig. 7 a detail of fig. 6.

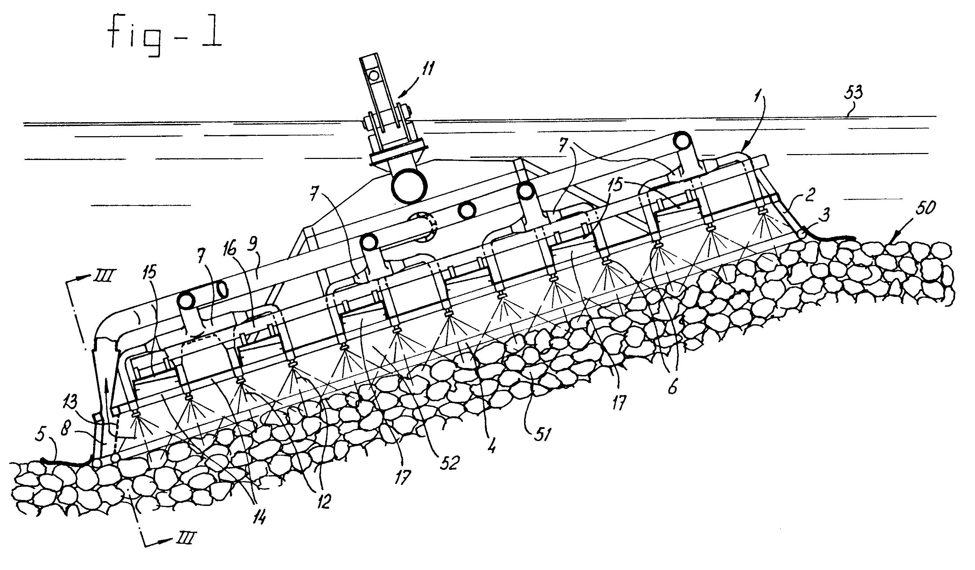

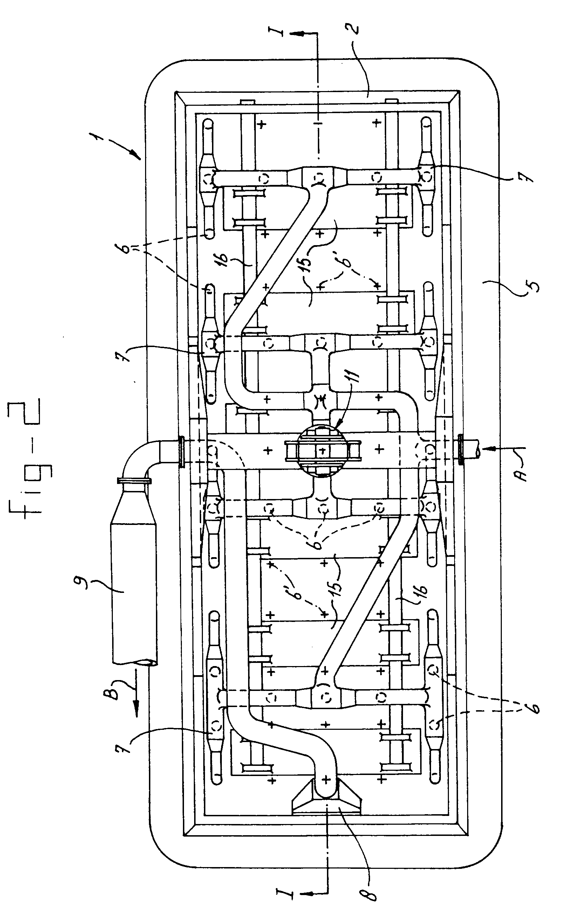

Figs. 1 - 3 show a device according to the present invention placed on an area 51 of the underwater bed 50, in this case a slope (the slope is not shown in Fig. 2). The device shown is intended to be used as a stationary device, which is periodically moved to and from the underwater bed. In the present example the area 51 is formed by a layer of loose stones which thus form a ground cover to protect the underwater bed 50. On this layer there is a surface layer to be removed (not shown), for example a layer of sludge. The device 1 is situated entirely below the water surface 53.

In the device 1, the screen 2 and flexible edge means situated all around the edge 3, in this case in the form of a flexible apron 5, screen off a volume of water 52 directly adjacent to the underwater bed. These flexible edge means extend over a distance from the edge 3 long enough and are flexible enough such that they are draped over the underwater bed. For this purpose, yielding crane jib means (not shown) can be used. The screened-off volume of water 52 is connected by means of an opening 4, of which the periphery is bounded by the bottom edge 3 of the screen 2, to the surface layer to be removed (not shown) and the area 51 of the underwater bed 50. Inside the screen 2 is a device for the creation of a liquid flow; a number of jet nozzles 6. These jet nozzles 6 are connected by means of a system of pipes 7 to a liquid pump (not shown). The jet nozzles 6 can be fitted in various patterns such as, for example, in a pattern of the type shown in Fig. 2, or in a pattern which is supplemented by jet nozzles 6' (see Fig. 2), in which case the system of pipes 7 must, of course, be adapted. Of course, other patterns are also possible. The screen 2 also contains a suction aperture 8 which is connected by means of a system of pipes 9 to another liquid pump. The device can be connected by means of a crosshead system 11 to, for example, a cock, so that the device 1 can be manipulated.

Closable holes 14 are provided in the screen 2, in order to ensure that during the manipulation of the device shown the water displacement thereof is minimised, for the purpose of minimising or even entirely eliminating the occurrence of eddies in the water.

In the situation shown these holes 14 are shut off by panels 15 which are fixed to drive rods 16. The holes 14 are provided with an upright collar edge 17, the top edge of which slopes corresponding to the slope of the bottom side of the covers 15. This ensures an accurate sealing of the holes 14. Moving the rods 16 to the right in the drawing in Fig. 1 causes the holes 14 to be opened. This opening and also the closing of the holes 14 take place by moving the panels 15 virtually parallel to the screen 2, which also causes the least possible water displacement of the device 1 during its up and down movement.

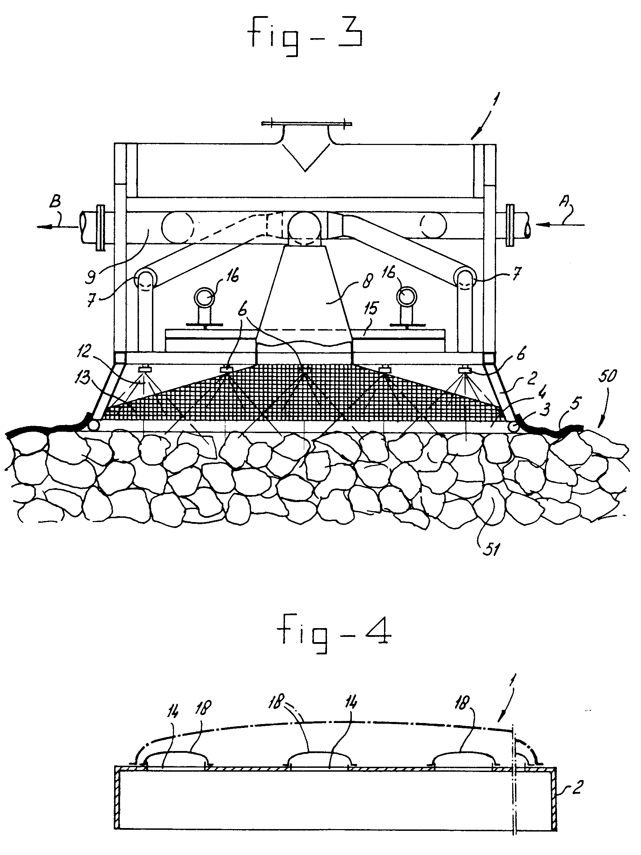

An alternative to the provision of such a slight water displacement is shown in Fig. 4. In this figure the screen 2 is shown schematically in cross-section along the line I-I in Fig. 2. In this case the device is largely cut away in the drawing to the right of the vertical line of symmetry. A sealing flexible layer 18 which is fixed to the screen 2 is fitted over the holes 14. Due to the fact that the dimensions of such a flexible layer 18 are greater than a hole 14 to be shut off, the flexible layer 18 has a certain freedom of movement. Depending on the extent of freedom of movement of the flexible layer 18, the device 1 can now be moved up and down with little water displacement.

As shown in Fig. 4, each hole 14 can be provided with a corresponding flexible layer 18 or, as shown by dotted lines, a sealing flexible layer 18 can shut off all holes 14.

The device then works as follows:
The device 1 is placed on the underwater bed 50 with open holes 14.

Once placed on an area 51 of the underwater bed 50, with the sealing aprons 5 in the position shown, the openings at the top side are closed and liquid is pumped by means of a pump through the pipe system 7 to the jet nozzles 6 in the direction of arrow A in Fig. 2. The liquid then gushes out of the jet nozzles 6, so that liquid jets 12 are produced and create a liquid flow in the direction of the underwater bed. This liquid flow loosens the surface layer to be removed from the underwater bed. Besides, it is possible with the liquid jets 12 to clean deep between the stones of the slope 51. Removing liquid by suction from the screened-off volume of water 52 through the suction aperture 8 and through pipes 9 in the direction of arrow B in Fig. 2 at the same time causes the removed surface layer to be discharged. In the situation shown in Fig. 1 the removed surface layer will glide downwards along the gradient of the slope 51, which means that it is preferable to provide the suction aperture 8 in the place shown. The surface layer discharged with the liquid can be conveyed, for example, to a settling tank, from which after settling of the removed surface layer the liquid can be re-used for feeding of the jet nozzles 6. This produces a more or less closed system, in which as little water as possible is polluted with substances from the surface layer to be removed. The sealing action of the flexible apron 5 means that outside the screen 2 little or nothing of the processes taking place inside the screen 2 will be noticeable.

By ensuring that a lower liquid pressure prevails in the screened-off volume of water 52 than the liquid pressure of the surrounding water, it is ensured that the flexible apron 5 is held pressed onto the underwater bed 50. This also ensures that through any leaks in the screen 2, the flexible apron 5, or in the connection between these two, only water from the environment can penetrate the screened-off volume of water 52. The reverse is not possible, so that no loosened surface layer can go into the surrounding water. Such a lower liquid pressure in the screened-off volume of water 52 can be achieved by extracting more liquid per unit time from the screened-off volume 52, for example through the suction aperture 8, than the quantity fed in through, for example, the jet nozzles 6. For the setting of a suitable lower pressure (partial vacuum) relative to the surrounding water, one or more apertures (not shown) can, for example, be present in the screen 2, provided with non-return valve devices which prevent a liquid flow through these apertures from inside the screen 2 to the outside. These non-return valve devices can also regulate this liquid flow in such a way that a set partial vacuum is not exceeded inside the device 1. This can be necessary, for example, in order to prevent the screen 2 from being pressed together too much, which would cause the screen 2 to lose its shape.

In order to prevent large objects which could cause damage to the device 1, or which must remain in place, from being loosened from the bed by the liquid flow generated, it is advantageous for a grille (not shown) to be provided in the opening 4. In the example shown in Figs. 1 and 3, this grille will extend essentially parallel to the slope 51. A grille 13 can also be fitted in front of the suction apertures 8.

After the stopping of the internal liquid flow in the device 1, the holes 14 are opened and the device 1 is then removed from the underwater bed 50.

The embodiment shown in Fig. 4 need not, of course, be provided with panels 15 for shutting off the holes 14, since the flexible layer 18 ensures a good screening-off of the screened-off water volume 52 during the removal of the surface layer by the device 1. In that case the holes 14 need not be opened or shut during the placing of the device 1 on and its removal from the underwater bed 50.

Instead of a stationary device, the embodiment of fig.1-4 can be made such that it is movable over the underwater bed while operating. Furthermore, it is possible to provide holes 14 and closing panels 15 in the sides of the screen 2, to further eliminate the occurence of eddies by moving the device parallel to the underwater bed at a distance from it.

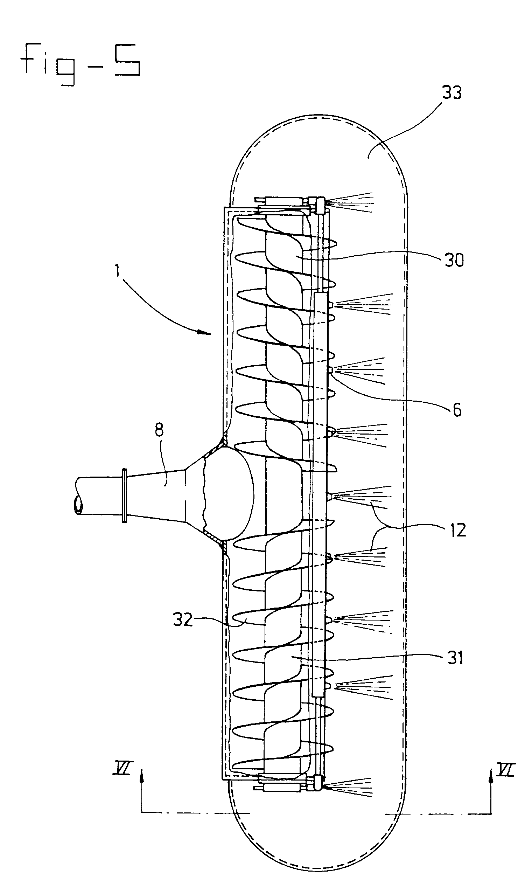

Another example of a soil loosening device according to the invention is shown in fig. 5-7. A device 1 comprising screw-type means 30, 31 is shown to remove a surface layer 54 from the underwater bed 50. These screw-type means are surrounded by a cage 35 which opens towards the bottom and the front. This cage 35 opens relatively high above the underwater bed 50, since the surface layer 54 to be removed by this device 1 can be rather thick an its height can vary to a great extend locally (here only a thin layer is shown). During normal operation, the device 1 is moved over the underwater bed 50 in the direction of arrow C. The screw means 30, 31 are positioned each at a side of central suction aperture 8. Their blades have a pitch and are rotatably driven during normal operation such that from aside surface layer 54 is transferred towards suction aperture 8. The expediency of the device 1 can further be enhanced by water jets 12 ejecting from nozzles 6.

Above the cage 35, the screw 30, 31 and nozzle means 6 a plate or screen 33 is provided from which flexible edge means 5 are suspended, extending completely along the outer edge 34 of plate 33 and sealingly rest with their lower edge on the underwater bed 50. These loose fitting flexible edge means 5 are web-like and are weightened at their lower edges for example by chains 38. The loose fitting flexible edge means 5 are designed in such a way that it is not possible for the means 5 to contact the moving parts of the soil loosening device 1. Thus plate 33 and flexible edge means 5 screen off the volume of water 52. For reasons of clarity, the plate 33 as well as cage 35 are partly broken away (fig. 1). Of course, the plate 33 can be formed differently, e.g. with the edges 34 bent to the underwater bed 50.

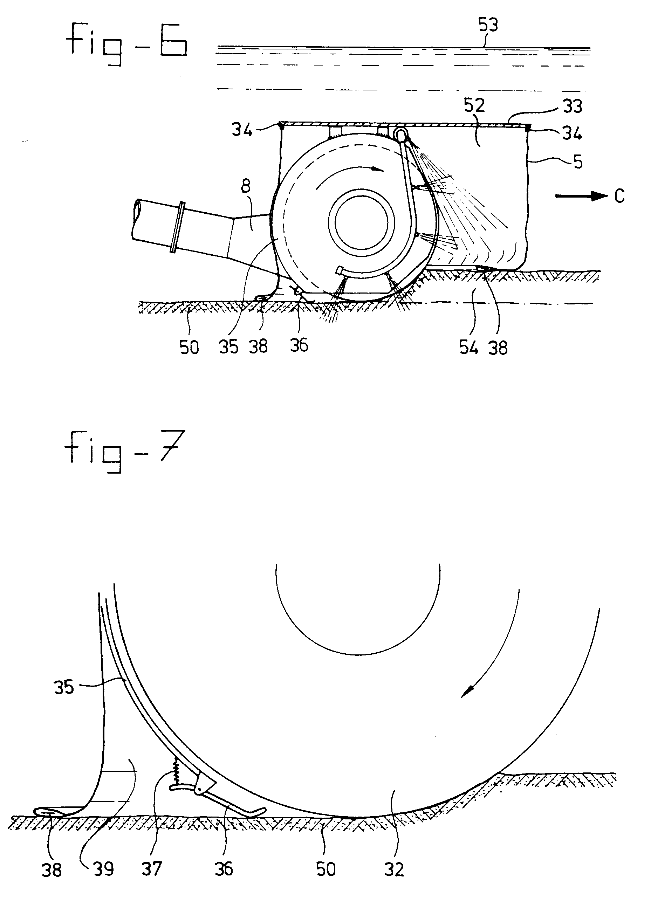

To further prevent possible leakage of surface layer at the back of the device 1, a row of strip means 36 are placed within the flexible edge means 5, pivotably mounted at the bottom of cage 35, as shown in detail in fig. 7. These strip means are resilient held against the underwater bed 50 by springs 37. These strip means enable to keep the dead volume 39 just behind the screw means 30, 31 and below cage 35 as little as possible, preventing surface layer from escaping towards the back of the device 1. Instead of these pivotably mounted strip means, e.g. clamped rubber strips can be used. Also, it is possible to leave out the flexible edge means 5 behind these strip means 36, since they also form part of the sealing means according to the invention. Despite the heavy disturbance within the plate 33 and the edge means 5, it is found out that outside the device 1 little or nothing can be observed regarding the processes carried out by it.

To get a very high cleaning efficiency, the screened-off volume 52 is cleaned for removing the device 1 from the underwater bed 50 after a cleaning operation by ending all water supply from the liquid path and maintaining the suction towards suction apperture 8, such that only enviromental water enters the screened-off volume.

Although the present invention is largely described with reference to the appended drawings, it is, of course, clear that various modifications can be made to the devices shown, without going beyond the framework of the invention. For example, it is possible to fix the jet nozzles 6 hingedly, so that the jet nozzles can be directed.

Another possibility is to fit a control system which regulates pressure, output and jet direction of the jet nozzles 6 individually or in groups, so that the removal of the surface layer can be carried out as efficiently as possible by means of the device 1 of fig. 1-4.

It is also possible, of course, to create a liquid flow or soil loosening action in a different way, for example by means of rotating brushes or screw blades. Also e.g. cutter means or bucket wheel-means can be used to act on the surface layer to be removed. It can also be an advantage to make the screen 2 articulated, so that the contour of a highly curved underwater bed 50 can be followed.

The sealing means 5 situated along the bottom edge 3 of the closed screen 2 of the device can also be achieved in alternative ways. The apron 5 of flexible material such as canvas or sheeting shown in the figures can be reinforced, for example, with boning which projects outwards at an angle of 30 - 60° to the slope 51. The apron 5 can also be reinforced with, for example, metal parts such as chains which may or may not be suspended from arms. The reinforcement can also consist of bags or bolsters attached to the apron and having stony material and/or liquid confined in them. In addition, instead of an apron 5, it is possible to use a readily compressible material such as plastic foam or a liquid-filled hose, for example a rubber hose which runs along the bottom edge 3 of the screen 2 of the device 1 and is attached thereto in such a way that the device 1 is supported fully or partially on the underwater bed 50 by means of these sealing devices. It is also possible to make the bottom edge of the screen 2 in a device 1 placed on the underwater bed 50 interact with the underwater bed by placing a loose material around the bottom edge 3 on the underwater bed 50. Also, features from the devices shown in fig. 1-4 and fig. 5-7 can be combined.

The essence of the invention is that it has become possible with the invention to largely or completely eliminate the possibility of removed surface layer from leaking towards the environment while also avoiding causing eddies in the water during positioning of a device for the removal of a surface layer from an underwater bed on said bed and remove it therefrom.

## Claims

1. Device (1) for the removal of a surface layer (54) from an underwater bed (50), such as a layer of sludge, comprising a frame to be lowered onto the underwater bed (50), means (6) to loosen said surface layer to be removed, one or more suction apertures (8) connected to a first liquid pump to suck the surface layer loosened by said means (6), and a screen (2), the bottom edge (3) of which bounds the periphery of an opening through which the said loosening means (6) and the said apertures (8) can engage with the underwater bed (50), which bottom edge (3) comprises flexible edge means (5), the screen (2) and the flexible edge means (5) surrounding said loosening means (6) and said apertures (8), which flexible edge means (5) are suitable for interacting in a sealing manner with the underwater bed, the flexible edge means (5) running along the whole length of the bottom edge (3) of the said screen (2), characterised in that, the said soil loosening means (6) are jet nozzles (6) and that the said edge means (5) comprise relatively thin loose fitting drapable web-like means, which are long enough and are flexible enough such that they are draped over the underwater bed if the device (1) is lowered thereon.

2. Device (1) for the removal of a surface layer (54) from an underwater bed (50), such as a layer of sludge, comprising a frame to be lowered onto the underwater bed (50), means (30, 31) to loosen said surface layer to be removed, one or more suction apertures (8) connected to a first liquid pump to suck the surface layer loosened by said means (30,31), and a screen (33), the outer edge of which bounds the periphery of an opening through which the said loosening means (30,31) and the said apertures (8) can engage with the underwater bed (50), which outer edge (34) comprises flexible edge means (5,36), the screen (33) and the flexible edge means (5,36) surrounding said loosening means (30,31) and said apertures (8) together with the said screen (33), which flexible edge means (5,36) are suitable for interacting in a sealing manner with the underwater bed, the flexible edge means (5,36) running along the whole length of the outer edge of the said screen (33), characterised in that, the said soil loosening means are means (5) such as screw means, rotating brushes, cutter means or bucket means and that the said edge means (5,36) comprise a relatively thin loose fitting drapable web-like means (5) with optionally a row of strip means (36) placed within the web like means (5) which web-like means are long enough and are flexible enough such that they are draped over the underwater bed if the device (1) is lowered thereon and which may be left out behind the strip means (36).

3. Device according to claim 1 or 2, wherein the lower edge of the relatively thin loose fitting drapable web-like means is weightened.

4. Device according to claim 2 or 3, for the situation that a row of strip means (36) is present, wherein said strip means (36) are resilient.

5. Device according to any of claims 1-4, wherein closable holes (14) are provided in the screen (2) such that the occurrence of eddies in the water during raising and lowering or moving parallel above the underwater bed of the frame is minimized when the holes are open.

6. Device according to claim 5, wherein said holes (14) are shut off by panels (15) which can be moved virtually parallel to the screen (2).

7. Device according to claim 5, wherein a sealing flexible layer (18) fastened to the screen (2) and of a larger size than a hole (14) to be shut off, extends over the holes (14).

8. Device according to any of the claims 1-7, wherein the device is provided with means for the creation and maintenance of a lower pressure within the screen (2) if placed on the underwater bed relative to the pressure of the surrounding water outside the screen.

9. Device according to any of Claims 1-8, wherein a grille is situated in the opening (4) bounded by the botton edge of the screen (2).

## Patentansprüche

1. Vorrichtung (1) zum Entfernen einer Oberflächenschicht (54), wie beispielsweise einer Schlammschicht, von einem Unterwasserboden (50), die ein auf den Unterwasserboden (50) abzusenkendes Gestell umfaßt, Einrichtungen (6), die die zu entfernende Oberflächenschicht lösen, eine oder mehrere Ansaugöffnungen (8), die mit einer ersten Flüssigkeitspumpe verbunden sind, um die durch die Einrichtungen (6) gelöste Oberflächenschicht abzusaugen, sowie eine Blende (2), deren unterer Rand (3) den Umfang einer Öffnung begrenzt, durch die die Löseeinrichtungen (6) und die Öffnungen (8) mit dem Unterwasserboden (50) in Kontakt kommen können, wobei der untere Rand (3) eine flexible Kanteneinrichtung (5) umfaßt, die Blende (2) und die flexible Kanteneinrichtung (5) die Löseeinrichtungen (6) und die Öffnungen (8) umgeben, wobei sich die flexible Kanteneinrichtung (5) dazu eignet, auf abdichtende Weise mit dem Unterwasserboden zusammenzuwirken, die flexible Kanteneinrichtung (5) über die gesamte Länge des unteren Randes (3) der Blende (2) verläuft, **dadurch gekennzeichnet**, daß die Bodenlöseeinrichtungen (6) Strahldüsen (6) sind und daß die Kanteneinrichtung (5) eine relativ dünne, lose anliegende, fallende, bahnartige Einrichtung umfaßt, die lang genug und flexibel genug ist, so daß sie auf den Unterwasserboden fällt, wenn die Vorrichtung (1) darauf abgesenkt wird.

2. Vorrichtung (1) zum Entfernen einer Oberflächenschicht (54), wie beispielsweise einer Schlammschicht, von einem Unterwasserboden (50), die ein auf den Unterwasserboden (50) abzusenkendes Gestell umfaßt, Einrichtungen (30, 31), die die zu entfernende Oberflächenschicht lösen, eine oder mehrere Ansaugöffnungen (8), die mit einer ersten Flüssigkeitspumpe verbunden sind, um die durch die Einrichtungen (30, 31) gelöste Oberflächenschicht abzusaugen, sowie eine Blende (33), deren äußerer Rand den Umfang einer Öffnung begrenzt, durch die die Löseeinrichtungen (30, 31) und die Öffnungen (8) mit dem Unterwasserboden (50) in Kontakt kommen können, wobei der äußere Rand (34) eine flexible Kanteneinrichtung (5, 36) umfaßt, die Blende (33) und die flexible Kanteneinrichtung (5, 36) die Löseeinrichtungen (30, 31) und die Öffnungen (8) zusammen mit der Blende (33) umgeben, wobei sich die flexible Kanteneinrichtung (5, 36) dazu eignet, auf abdichtende Weise mit dem Unterwasserboden zusammenzuwirken, die flexible Kanteneinrichtung (5, 36) über die gesamte Länge des äußeren Randes der Blende (33) verläuft, **dadurch gekennzeichnet**, daß die Bodenlöseeinrichtungen Einrichtungen (5), wie beispielsweise Schneckeneinrichtungen, Drehbürsten, Schneideinrichtungen oder Eimereinrichtungen sind, und daß die Kanteneinrichtung (5, 36) eine relativ dünne, lose anliegende, fallende, bahnartige Einrichtung (5) mit einer wahlweise vorhandenen Reihe von Bandeinrichtungen (36) umfaßt, die innerhalb der bahnartigen Einrichtung (5) angeordnet sind, wobei die bahnartige Einrichtung lang genug und flexibel genug ist, so daS sie auf den Unterwasserboden fällt, wenn die Vorrichtung (1) darauf abgesenkt wird, und sie hinter der Bandeinrichtung (36) weggelassen werden kann.

3. Vorrichtung nach Anspruch 1 oder 2, wobei der untere Rand der relativ dünnen, lose anliegenden, fallenden, bahnartigen Einrichtung beschwert ist.

4. Vorrichtung nach Anspruch 2 oder 3 für den Fall, daß eine Reihe von Bandeinrichtungen (36) vorhanden ist, wobei die Bandeinrichtungen (36) federnd sind.

5. Vorrichtung nach einem der Ansprüche 1 - 4, wobei verschließbare Löcher (14) in der Blende (2) vorhanden sind, so daß das Auftreten von wirbeln im Wasser beim Anheben und Absenken oder paralleler Bewegung des Gestells über dem Unterwasserboden auf ein Minimum verringert wird, wenn die Löcher offen sind.

6. Vorrichtung nach Anspruch 5, wobei die Löcher (14) durch Platten (15) verschlossen werden, die praktisch parallel zu der Blende (2) bewegt werden können.

7. Vorrichtung nach Anspruch 5, wobei sich eine abdichtende, flexible Schicht (18), die an der Blende (2) befestigt und größer als ein zu verschließendes Loch (14) ist, über die Löcher (14) erstreckt.

8. Vorrichtung nach einem der Ansprüche 1 - 7, wobei die Vorrichtung mit Einrichtungen versehen ist, die beim Aufsetzen auf den Unterwasserboden einen Druck innerhalb der Blende (2) erzeugen und aufrechterhalten, der niedriger ist als der Druck des umgebenden Wassers außerhalb der Blende.

9. Vorrichtung nach einem der Ansprüche 1 - 8, wobei ein Gitter in der Öffnung (4) angeordnet ist, die durch den unteren Rand der Blende (2) begrenzt wird.

## Revendications

1. Dispositif (1) destiné à enlever d'un lit sous-marin (50), une couche superficielle (54), par exemple une couche de vase, comprenant un cadre à abaisser sur le lit sous-marin (50), des moyens (6) destinés à détacher ladite couche superficielle à enlever, une ou plusieurs ouvertures d'aspiration (8) reliées à une première pompe à liquide pour aspirer la couche superficielle détachée par lesdits moyens (6), et un écran (2), dont le bord inférieur (3) limite la périphérie d'un orifice à travers lequel lesdits moyens de détachement (6) et lesdites ouvertures (8) peuvent venir en contact avec le lit sous-marin (50), ce bord inférieur (3) comprenant des moyens de bordure flexibles (5), l'écran (2) et les moyens flexibles (5) entourant lesdits moyens de détachement (6) et lesdites couvertures (8), lesdits moyens de bordure flexibles (5) étant aptes à interagir de manière étanche avec le lit sous-marin, ces moyens de bordure flexibles (5) s'étendant sur toute la longueur du bord inférieur (3) dudit écran (2), caractérisé en ce que lesdits moyens de détachement (6) du sol sont des éjecteurs (6) et en ce que lesdits moyens de bordure (5) comprennent des moyens en forme de bandes relativement minces, ajustées de façon lâche, qui peuvent être drapés, qui sont suffisamment longs et suffisamment flexibles pour être drapés au-dessus du lit sous-marin si le dispositif (1) est abaissé sur celui-ci.

2. Dispositif (1) destiné à enlever d'un lit sous-marin (50) une couche superficielle (54), par exemple une couche de vase, comprenant un cadre à abaisser sur le lit sous-marin (50), des moyens (30, 31) destinés à détacher ladite couche superficielle à enlever, une ou plusieurs ouvertures d'aspiration (8) reliées à une première pompe à liquide pour aspirer la couche superficielle détachée par lesdits moyens (30, 31), et un écran (33), dont le bord extérieur limite la périphérie d'un orifice à travers lequel lesdits moyens de détachement (30, 31) et lesdites ouvertures (8) peuvent venir en contact avec le lit sous-marin (50), ce bord extérieur (34) comprenant des moyens de bordure flexibles (5, 36), l'écran (33) et les moyens de bordure flexibles (5, 36) entourant avec ledit écran (33) lesdits moyens de détachement (30, 31) et lesdites ouvertures (8) lesdits moyens de bordure flexibles (5, 36) étant aptes à interagir de manière étanche avec le lit sous-marin, les moyens de bordure flexibles (5, 36) s'étendant sur toute la longueur du bord extérieur dudit écran (33), caractérisé en ce que lesdits moyens de détachement du sol sont des moyens (5) du type à vis, des brosses rotatives, des moyens du type à couteaux ou des moyens du type à godets, et en ce que lesdits moyens de bordure (5, 36) comprennent des moyens en forme de bandes relativement minces ajustés de façon lâche qui peuvent être drapés, accompagné facultativement d'une rangée de moyens d'arrachage, lesdits moyens en forme de bandes étant suffisamment longs et suffisamment flexibles pour être drapés au-dessus du lit sous-marin, si le dispositif (1) est abaissé sur celui-ci, et pouvant être omis derrière les moyens d'arrachage (36).

3. Dispositif selon la revendication 1 ou 2, dans lequel le bord inférieur des moyens en forme de bande relativement minces, s'ajustant de façon lâche et susceptible d'être drapés, sont alourdis.

4. Dispositif selon la revendication 2 ou 3, destiné au cas où une rangée de moyens d'arrachage (36) est présente, dans lequel lesdits moyens d'arrachage (36) sont élastiques.

5. Dispositif selon l'une quelconque des revendications 1 à 4, dans lequel des trous (14) susceptibles d'être fermés sont ménagés dans l'écran (2) de manière que l'apparition de courants parasites dans l'eau soit minimisée, dès lors que les trous sont ouverts, quand le cadre est élevé, abaissé ou déplacé, parallèlement au lit sous-marin.

6. Dispositif selon la revendication 5, dans lequel lesdits trous (14) sont fermés par des panneaux (15) qui peuvent être déplacés virtuellement en parallèle à l'écran (2).

7. Dispositif selon la revendication 5, dans lequel une couche flexible d'étanchéité (18), fixée à l'écran et de dimensions supérieures à un trou (14) à fermer, s'étend au-dessus de ce trou (14).

8. Dispositif selon l'une quelconque des revendications 1 à 7, comportant des moyens destinés à créer et à entretenir à l'intérieur de l'écran (2), s'il est placé sur le lit sous-marin, une pression inférieure à la pression de l'eau qui entoure l'écran à l'extérieur.

9. Dispositif selon l'une quelconque des revendications 1 à 8, dans lequel une grille est située dans l'orifice (4) limité par ledit bord inférieur de l'écran (2).
